(19) Europäisches Patentamt
European Patent Office
Office européen des brevets

(11) **EP 2 363 048 B1**

(12) **EUROPEAN PATENT SPECIFICATION**

(45) Date of publication and mention
of the grant of the patent:
**10.10.2012 Bulletin 2012/41**

(51) Int Cl.:
*A47J 27/04* *(2006.01)*    *A23L 1/01* *(2006.01)*

(21) Application number: **10155661.1**

(22) Date of filing: **05.03.2010**

(54) **Steam oven for "sous-vide" cooking and method for using such oven**

Dampfofen zum Vakuumgaren und Verfahren zur Verwendung eines solchen Ofens

Four à vapeur pour la cuisson sous vide et son procédé d'utilisation

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**07.09.2011 Bulletin 2011/36**

(73) Proprietor: **Whirlpool Corporation**
**Benton Harbor, MI 49022 (US)**

(72) Inventors:
• **Morandotti, Alberto**
**21025, Comerio (IT)**
• **Bonassi, Luca**
**21025, Comerio (IT)**

(74) Representative: **Guerci, Alessandro**
**Whirlpool Europe S.r.l.**
**Patent Department**
**Viale G. Borghi 27**
**21025 Comerio (VA) (IT)**

(56) References cited:
**US-A- 5 445 062     US-A1- 2008 066 624**

• **BALDWIN D: "A Practical Guide To Sous Vide Cooking" 20081127, no. Draft 0.4f, 27 November 2008 (2008-11-27), pages 1-38, XP007915110**

**Description**

The present invention relates to a steam oven for cooking food placed in a vacuumized and sealed pouch and comprising an user interface and an electronic control unit. The present invention is also related to a method for cooking food placed in a vacuumized and sealed pouch when loaded in a steam oven.

*Sous-vide,* French for "under vacuum", is a food processing technology that involves the vacuum sealing of raw or partially prepared food in barrier plastic pouches, thermal processing at pasteurization temperatures and possibly chilling and storage at 0-3°C before reconstitution and consumption.

A device for carrying out this process is described in US 5,445,062.

Most researches on *sous-vide* cooking are dedicated to microbiological aspects; in fact legislation is moving towards the application of general food hygiene regulations and the requirement to use HACCP (hazard analysis and critical control point) principles. Sector-specific guidelines are being developed in many countries. The process steps involving heating or cooling are important as they should enhance the microbial stability of the food among other beneficial effects, such as flavour development, etc. In the heating up step usually only moderate core temperatures are obtained (typically 70°C) which guarantees superior quality in terms of nutritional and sensorial properties, but this also implies that vegetative cells of pathogenous microorganisms may survive. The main factors which determine the microbiological safety of *sous-vide* products are: the intensity of heat treatment, the rapidity of cooling, the temperature reached and the control of chilled storage (temperature and time).

Some of the major microbiological hazards associated with *sous-vide* processing are linked to food pathogens. Vacuum packaging provides a suitable environment for *Clostridium botulinum* type E, which is capable of growth and toxin production at 3°C. Pathogens capable of growth at low temperatures, e.g. *Listeria monocytogenes,* enterotoxigenic *Escherichia coli* and spore-formers such as *Bacillus cereus* may survive an inadequate heat process and then they can grow during chilled storage of the product. Strict adherence to temperature control must therefore be mandatory for the *sous-vide* processor, distributor, retailer and consumer.

Moreover, any leaks in the seal and packaging material may allow post-thermal processing contamination with pathogens.

For these reasons *sous-vide* development has been accompanied by dire warnings from regulatory authorities.

In 1988 the Food and Drug Administration of the USA (FDA) barred *sous-vide* production by small establishments such as restaurants, but allowed *sous-vide* processing in establishments which filed a process deemed to be safe by relevant health authorities.

The recommendations of the US Food and Drug Administration (FDA) for sous-vide processing are listed below:

- Sous-vide products should be produced and distributed with a HACCP approach.
- In addition to HACCP, GMP (Good Manufacturing Practices) sanitation guidelines should be strictly followed.
- In addition to the primary barrier of refrigeration, multiple barriers or hurdles should be incorporated into sous-vide products. Validation of the efficacy of multiple barriers should be accomplished with either inoculated pack studies or challenge studies.
- Because temperature abuse is common, sous-vide processors should use time-temperature recorders to monitor a product's temperature history. Also recommended is the use of individual time-temperature integrators on each package to indicate if temperature abuse has occurred and whether a potential hazard exists.

Furthermore, the National Advisory Committee on Microbiological criteria for Foods (NACMCF, USA) recommended that sous vide producers demonstrate a process sufficient to achieve a minimum 4 log reduction for *L. monocytogenes* and destruction of all vegetative pathogens, while the UK Department of Health and the Australian Quarantine and Inspection Services recommended a minimum product core temperature of 70°C during thermal processing for an intended shelf-life of 28 days at 0±3°C.

The role and importance of *L. monocytogenes,* a Gram positive asporogenous rod, as an agent of food-borne disease had become of major concern in recent years to the food industry as *L. monocytogenes* is one of the few food-borne pathogens that are capable of growth at refrigeration temperatures under anaerobic or microaerophilic conditions. One of the major concerns with sous vide products was therefore that *L. monocytogenes,* which is ubiquitous in environmental distribution, may survive the pasteurization process, and then grow during chilled storage of the product to infective levels. This is of particular concern in those products that may be consumed without any reheating. Clinical manifestations of listeriosi include meningitis, septicaemia, spontaneous abortion, conjuctivitis, oculoglandular listeriosis, cutaneous listeriosis, pneumonic listeriosis and cervicoglandular listeriosis.

It is clear that with all the above requirements and restrictions the so called sous-vide cooking process has not yet been adopted at home as a usual way of cooking food.

It is therefore an object of the present invention to provide a steam domestic oven which is capable to perform a sous-vide cooking process without the above risk of pathogens contaminating the cooked food. Another object of the present invention is to provide a cooking algorithms able to guarantee the quality and safety of *sous-vide* processed food products.

The above objects are reached thanks to the features listed in the appended claims.

Thanks to a dedicated set of cooking algorithms (well-defined combination of cooking time, temperature, and power) and to a maximum quantity of food loaded in the steam oven cavity, safety and performance of food cooked in "Sous-Vide" technique is guaranteed for different food categories that embrace plenty different recipes.

Further advantages and features of an oven and cooking method according to the present invention will be clear from the detailed following description, with reference to the attached drawings in which:

- Figure 1 is a flow diagram showing the general sous vide process, and
- Figure 2 is a chart showing the lethal effect for L. monocytogenes in a whole meat muscle, in which a graphical explanation of the algorithms according to the invention is shown.

In order to identify the principal hazards and identify the phases (critical point) in which a specific hazard can arise, the *sous-vide* process and its operating phases were studied and analysed.

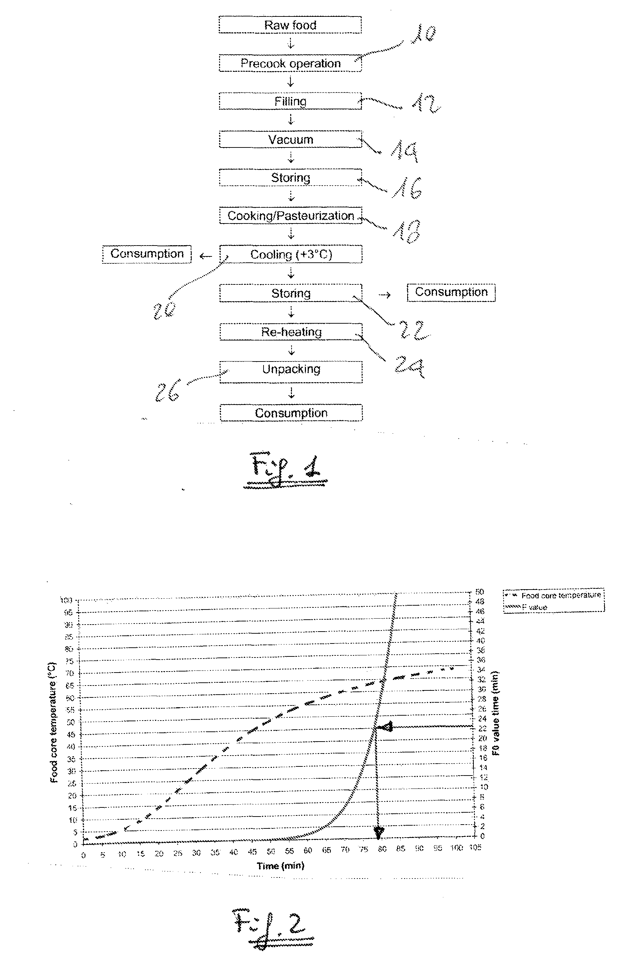

This risk analysis was conducted using the HACCP method. A food processing is represented by different steps or operations involved in the production of a food products or ready-meals. Several variables or parameters are involved in each single step. These must be controlled in order to manage the whole process and to assess the quality of the final product. The flow diagram of a representative sous-vide process is shown in Figure 1.

In step 10 the raw food can be subjected to an optional precook operation, for instance in order to induce a Maillard reaction on the surface of a meat piece. Then in step 12 the piece of food is introduced into a shaped pouch of a barrier multilayer film. In step 14 the open portion of the pouch is heat sealed under vacuum. The storage step 16 at low temperature (around 3° C) cannot be longer than 7 days in order to prevent an increase of pathogens. In step 18 the food is heated/cooked at a temperature usually lower than 100°C for a predetermined time. In step 20 the pouch is quickly cooled at around 3°C and it is ready for consumption or for storage in step 22. After storage, the pouch can be re-heated (step 24), the food can be extracted from the pouch (step 26) and it can be consumed.

From figure 1 it is clear that the consumption of *sous-vide* processed food can occur in different phases of the process. In several cases the domestic user can consume the prepared meal after cooling (+3°C) or after storing at fridge temperature. Some food preparations can be eaten warm, thus they have to be re-heated before the consumption. This step (re-heating) can't be considered a treatment able to remove eventual microbiological contaminations.

The different phases of the process were analysed in order to identify the main hazards. In particular the risk analysis was focused on microbiological and hygienic hazard. The risk analysis was conducted by assessing, for each hazard taken into consideration and for each phase, the severity of the hazard and the probability of its occurring in a specific phase of the process. Foodstuff has been clusterized into food categories, representative of ingredients suitable for sous vide cooking preparations.

According to gastronomy literature/chef experience three processing temperatures (95°C, 85°C and 75°C) have been identified and associated to the different food categories, and particularly 95°C for a first cluster of food categories comprising creams (salty or sweet), fruits, vegetables and mollusks, 85°C for a second cluster of food categories comprising shellfishes, fishes and poultry, and 75°C for a third cluster of food categories including all kind of meats.

For each food category and for a predetermined maximum quantity of food loaded into a single pouch a theoretical minimum cooking time was determined. The maximum load of food that can be processed at the same time is strictly linked to the positioning of pouches on a single or double rack (4 pouches max on one rack, laying horizontally in a single layer). In order to avoid too long cooking time, the applicant has found that the best compromise is a total load lower than 5600 g of food (double rack), preferably lower than 4200 g of food and more preferably around 2800 g (single rack) of a certain food placed in different pouches. For each pouch the preferred load is not higher than 700 g of food. Of course this load has to be considered as a maximum value admissible for assuring the predetermined reduction of food pathogens, and lower values can be used as well.

The calculation of the minimum cooking time is obtained from specific curves of lethality obtained through an experimental activity. The minimum cooking time value is correspondent to time necessary to reduction of 6 logarithmic unit "*Listeria monocytogenes*" when priory inoculated in food. This technique is widely applied in microbiological studies in order to give precisely data about safety of food, and it does not need to be fully explained here. Following table 1 shows food categories and related cooking temperature conditions for sous-vide cooking cycles.

Table 1

| Food category | Recipe | Cooking temperature (°C) |
|---|---|---|
| Meat (whole muscle) | Chine | 75 |
| Poultry | Stuffed chicken | 85 |
| Fish (fillet) | Salmon | 85 |
| Mollusc | Octopus | 95 |
| Shellfish | Shrimps | 85 |
| Vegetables | Potatoes & Mushrooms | 95 |
| Fruit | Apple | 95 |
| sweet cream | Sweet cream | 95 |
| Salty cream | Salmon and cream | 95 |

Example 1 — Determination of minimum cooking time

Tests were carried out by the applicant on a steam oven having a cavity of 37 litres liters and a maximum power of 1.2 kW.

As an example of graphical use of an algorithm according to the invention, figure 2 shows a graphical calculation of minimum cooking time based on F value of *Listeria monocytogenes* in meat.

F-value is defined in units of time (minutes) and is a measure of the microbial inactivation capability of a heat sterilization process.

The F-value indicates the effect of a heat treatment, which is governed by the product heating temperature and the time during which the product is held at this temperature (product holding time). The time and temperature factors govern the ultimate effect, this effect being directly proportional to the time; triplication of the time at the relevant temperature triplicates the effect.

Other setup conditions of the experimentation:

- Oven used for testing: Saturated steam oven
- Temperature set: 75°C
- Food load: max possible (700g per pouch)
- Pouch number: 4 pouches on a single shelf/grid
- Temperature probe: 4 different thermocouples positioned at core of each pouch (one per pouch)

In the experimentation the derived time has been exclusively calculated taking into account the slower temperature profile among four pouches so that most critical conditions were selected.

The thermal death time (*TDT*) or $F_T$-value is a parameter used to compare the microbial lethality induced by heat treatments. It corresponds to the time required to achieve, at a given temperature, a specified reduction in microbial number. It is quoted with suffixes indicating the heat treatment temperature and the z value (z: interval of temperature, in Celsius degrees, able to bring about a ten-fold change of the decimal reduction time, $D_T$) of the target or reference micro-organism. The $F_T$ value o lethality effect could be considered as the time needed to reduce microbial population by a multiple of the D-value according the following Eq. (1):

$$\text{Eq1} \qquad\qquad F_T = t \cdot L$$

where **L** is the **lethal rate**:

$$\text{Eq2} \qquad\qquad L = 10^{(T-T_{ref})/z}$$

where $T_{ref}$ is the reference temperature used to determine a decimal reduction time and z values of a specific bacterium.

The decimal reduction time (known as D value) is the time required at a given temperature to reduce a specific microbial population by 90% (or 1 Logarithm cycle), while z value is the temperature coefficient of microbial destruction, i.e. the increase of temperature required to achieve a tenfold change of the decimal reduction time. The decimal reduction time D and the z value are two basic parameters defining the heat resistance characteristics of single microorganisms.

And consequently:

$$Eq3 \qquad F_T = t \cdot 10^{(T - T_{ref})/z}$$

Conditions during heat treatment and thermal properties of food do not permit instantaneous temperature change in the bulk system and the equivalent lethal effect at the reference temperature need to be determined.

Among the various mathematical and graphical methods developed to determine the equivalent thermal time of a heat treatment, the following equation (4) was considered:

$$Eq\ 4 \qquad F = \Delta t \sum 10^{(T - T_{ref})/z} = \Delta t \sum L$$

The F value was, thus calculated by summation of the finite partial equivalent thermal time.

For our purpose, temperature data were acquired every 1 min ($\Delta t$ =1 min), a reference temperature equal to 60 °C ($T_{ref}$) and a z value of 7.2 °C were considered. The latter value was chosen as referred to an alterative and pathogenic microorganism particularly thermo resistant *L. monocytogenes*.

In the example shown in figure 2, for a calculated threshold F value of 22,8 minutes, the use of the F value curve gives a minimum derived time of 79 min for meat.

An additional margin has been applied for each food category and the "minimum cooking time" has been finally defined.

Following table 2 reports values of time estimated F from charts and "minimum cooking time" for each food category:

Table 2

| Menu | Submenu | Food category | Calculated lethal effect time (min) | Cooking time (min) [minimum value] | Cooking time (min) [maximum value] |
|---|---|---|---|---|---|
| Sous Vide | Cooking SV | Meat (whole piece) | 79 | 80 | 240 |
| | | Meat (chopped or sliced) | 43 | 45 | 240 |
| | | Poultry | 43 | 45 | 240 |
| | | Fish (fillets or piece) | 38 | 40 | 240 |
| | | Mollusc | 20 | 30 | 240 |
| | | Shellfish | 22 | 28 | 240 |
| | | Vegetables | 20 | 35 | 240 |
| | | Fruit | 17 | 25 | 240 |
| | | Sweet cream | 33 | 35 | 240 |
| | | Salty cream | 19 | 30 | 240 |
| | Reheat SV | Refrigerated (+4°C) | - | 0 | 240 |
| | | Frozen (-18°C) | - | 0 | 240 |

Even if in figure 2 for sake of clarity is shown a graphical method to calculate the minimum cooking time, it is clear that the electronic control unit of the oven, after the user has inputted the food category through the user interface of the oven, is capable to choose a predetermined cooking temperature stored for instance in a look up table and corresponding to a certain cluster of food categories, and to fix the minimum cooking time based on data of the above table 2 for each food category.

Even if the above tests (used for designing table 2) were carried out with four pouches on a single layer or shelf, identical results in terms of cooking and pathogens reduction were obtained by using up to eight pouches each containing a maximum load of 700 g of food, placed at two different levels in the steam oven cavity and avoiding an overlapping of pouches.

The cooking cycles tested by the applicant represent the best possible compromise in "Sous-Vide" cooking technique between high quality result for each recipe and safety. Thanks to that the customer can access this complicated technique massively used in industrial processing and now scaled down to domestic environment. Each algorithm according to the invention is able to provide a certain amount of heat to foodstuff in order to reach an acceptable sanity of food inside the pouch.

In order to assess real safety of food based on the experimental curves and theoretical calculation a series of microbiological test have been carried out by the applicant.

Example 2 — Microbiological test

The processed food have been analysed during the shelf life at different time (about every 3 days) in order to confirm the effect of the pasteurization treatment. Each condition of testing has been replicated three times.

The microbiological analyses were performed during the storage of cooked food in temperature abuse conditions (12°C) in order to verify:

- The absence of pathogens non-spore-forming such as: *Aeromonas hydrophila, Listeria monocytogenes, Vibrio parahemolyticus, Salmonella* spp, *Staphylococcus aureus*

or

- The increase or not of spore-forming bacteria such as: *Clostridium butyricum, Bacillus cereus, Clostridium perfringens*

Tests included many different potential factors of failure and variation, high levels of initial contamination and unusual temperature of storing.

The results of microbiological tests are reported in the following table.

The tests that gave negative results (growth of spore-forming bacteria or failure to eliminate non spore-forming bacteria) are indicated Significant (SIGN). The tests which gave positive results (absence of spore-forming or non-spore-forming bacteria) are indicated as non-significant (NON SIGN). None of the tests showed positive results as regards non spore-forming pathogenic micro-organisms; the positive results involved the tests where *Clostridium butirycum* and *Bacillus cereus* micro-organisms were used.

The tests performed on "Chine" and "Sweet cream" products never showed any positive results.

The following table 3 shows that only "Potatoes & mushrooms" recipe reported significant data below 7 days storing while all others not. These tests showed the presence of *Clostridiun butyricum.* Test repetition, after increasing the "minimum cooking time" to 35 min, showed negative results up to 7 days also for this category.

This experimental activity was useful to assess the effectiveness of the theoretical calculation for sanity food.

Table 3

| Recipe | Refrigeration time (g) | Outcome | |
| --- | --- | --- | --- |
| | | NON SIGN. | SIGN. |
| Chine (whole muscle of meat) | 3 | 36 | |
| | 7 | 3 | |
| | 10 | 41 | |
| Stuffed chicken | 2 | 4 | |
| | 3 | 60 | |
| | 5 | 4 | |
| | 7 | 5 | |
| | 10 | 82 | 3 |

(continued)

| Recipe | Refrigeration time (g) | Outcome | |
|---|---|---|---|
| | | NON SIGN. | SIGN. |
| Sweet cream | 6 | 12 | |
| Potatoes & Mushrooms | 2 | 8 | |
| | 3 | 52 | 2 |
| | 4 | 2 | |
| | 6 | 7 | |
| | 7 | 36 | 8 |
| | 10 | 9 | |
| Salmon | 2 | 4 | |
| | 3 | 54 | |
| | 5 | 4 | |
| | 7 | 10 | |
| | 10 | 56 | 7 |

On the basis of these results, it is possible to confirm that the cooking algorithm according to the invention is able to guarantee quality and safety of sous vide-processed food. A shelf life of 48 hours at 3°C without loss of safety, nutritional values and weight was obtained by using a steam oven with minor modifications to the electronic control unit and to user interface compared to a traditional steam oven. The shelf-life was reported on the plastic bag like a useful indication for the domestic user.

**Claims**

1. Steam oven for cooking food placed in a vacuumized and sealed pouch and comprising a user interface and an electronic control unit, **characterized in that** said electronic control unit is adapted to select a predetermined heating temperature on the basis of a food category chosen by the user through the user interface and of a maximum predetermined load of food, and to select a heating time according to a predetermined reduction of food pathogens.

2. Steam oven according to claim 1, wherein the electronic control unit is capable of storing different cooking temperatures each corresponding to a predetermined cluster of food categories, and different predetermined heating time each corresponding to a food category.

3. Steam oven according to claim 2, wherein the electronic control unit is capable of storing three different temperatures of 95°C, 85°C and 75°C corresponding to the following three clusters of food categories: a first cluster of food categories comprising creams (salty or sweet), fruits, vegetables and mollusks, a second cluster of food categories comprising shellfishes, fishes and poultry, and a third cluster of food categories including all kind of meats.

4. Steam oven according to claim 2 or 3, wherein the electronic unit is capable of storing a minimum heating time comprised between 17 and 25 minutes for fruits, a minimum heating time comprised between 22 and 28 minutes for shellfishes, a minimum heating time comprised between 19 and 30 minutes for salty creams and mollusks, a minimum heating time comprised between 20 and 35 minutes for sweet creams and vegetables, a minimum heating time comprised between 38 and 40 minutes for fishes, a minimum heating time comprised between 43 and 45 minutes for poultry and chopped or sliced meats and a minimum heating time comprised between 79 and 80 minutes for meats in a whole piece.

5. Steam oven according to claim 4, wherein the electronic unit is capable of storing a minimum heating time of about 25 minutes for fruits, a minimum heating time of about 28 minutes for shellfishes, a minimum heating time of about 30 minutes for salty creams and mollusks, a minimum heating time of about 35 minutes for sweet creams and vegetables, a minimum heating time of about 40 minutes for fishes, a minimum heating time of 45 minutes for poultry and chopped or sliced meats and a minimum heating time of about 80 minutes for meats in a whole piece.

6.  Steam oven according to any of the preceding claims, wherein the oven is capable of cooking a maximum predetermined load of food that is equal or lower than 5600 g.

7.  Steam oven according to claim 6, wherein the food is placed in pouch containing a load equal or lower than 700 g of food.

8.  Method for cooking food placed in a vacuumized and sealed pouch and loaded in a steam oven, **characterized in that** it comprises the following steps:

    - choosing a food category;
    - automatically selecting a predetermined heating temperature related to a cluster of food categories to which the chosen food category belongs and to a predetermined maximum amount of food, and
    - maintaining the food at said predetermined temperature for a predetermined time in order to achieve a predetermined reduction of food pathogens.

9.  Method according to claim 8, wherein said predetermined time is assessed experimentally on the basis of a threshold F value:

$$F_T = t \cdot 10^{(T - T_{ref})/z}$$

where T is the measured temperature inside the food contained in a vacuum pouch loaded in the oven at the predetermined heating temperature, $T_{ref}$ is the reference temperature used to determine a decimal reduction time and z value is the temperature coefficient of microbial destruction for a predetermined pathogen.

10. Method according to claim 8, wherein said predetermined time is assessed experimentally on the basis of a threshold F value:

$$F = \Delta t \sum 10^{(T - T_{ref})/z} = \Delta t \sum L$$

where T is the measured temperature inside the food contained in a vacuum pouch, $T_{ref}$ is the reference temperature used to determine a decimal reduction time, z value is the temperature coefficient of microbial destruction for a predetermined pathogen and L is the lethal time $L = 10^{(T - T_{ref})/z}$.

11. Method according to claim 9 or 10, wherein the reference temperature is about 60 °C and z value is about 7.2 °C, the reference pathogenic microorganism being *L. monocytogenes.*

12. Method according to any of claims 8-11, wherein the temperature is selected among three different temperatures of 95°C, 85°C and 75°C corresponding to the following three clusters of food categories: a first cluster of food categories comprising creams (salty or sweet), fruits, vegetables and mollusks, a second cluster of food categories comprising shellfishes, fishes and poultry, and a third cluster of food categories including all kind of meats.

13. Method according to claim 12, wherein the predetermined heating time is comprised between 17 and 25 minutes for fruits, between 22 and 28 minutes for shellfishes, between 19 and 30 minutes for salty creams and mollusks, between 20 and 35 minutes for sweet creams and vegetables, between 38 and 40 minutes for fishes, between 43 and 45 minutes for poultry and chopped or sliced meats and between 79 and 80 minutes for meats in a whole piece.

14. Method according to any of the preceding claims, wherein the predetermined maximum amount of food is equal or lower than 5600 g.

15. Method according to claim 14, wherein the maximum load of food in each pouch is equal or lower than 700 g.

**Patentansprüche**

1. Dampfofen zum Garen von in einen evakuierten und verschlossenen Beutel platzierten Nahrungsmitteln und umfassend eine Benutzeroberfläche und eine elektronische Steuereinheit, **dadurch gekennzeichnet, dass** die genannte elektronische Steuereinheit dazu angepasst ist, eine vorherbestimmte Heiztemperatur basierend auf einer vom Benutzer über die Benutzeroberfläche gewählten Nahrungsmittelkategorie und einer maximalen vorherbestimmten Beladung an Nahrungsmitteln auszuwählen und eine Heizdauer gemäß einer vorherbestimmten Reduktion an Nahrungsmittelpathogenen auszuwählen.

2. Dampfofen nach Anspruch 1, wobei die elektronische Steuereinheit in der Lage ist, verschiedene Gartemperaturen, die jeweils einer vorherbestimmten Gruppe von Nahrungsmittelkategorien entsprechen und verschiedene vorherbestimmte Heizdauern, die jeweils einer Nahrungsmittelkategorie entsprechen, zu speichern.

3. Dampfofen nach Anspruch 2, wobei die elektronische Steuereinheit in der Lage ist, drei verschiedene Temperaturen von 95 °C, 85 °C und 75 °C entsprechend den folgenden drei Gruppen von Nahrungsmittelkategorien zu speichern: einer ersten Gruppe von Nahrungsmittelkategorien, umfassend Cremes (salzig oder süß), Obst, Gemüse und Weichtiere, einer zweiten Gruppe von Nahrungsmittelkategorien, umfassend Schalentiere, Fisch und Geflügel und einer dritten Gruppe von Nahrungsmittelkategorien, umfassend alle Arten von Fleisch.

4. Dampfofen nach Anspruch 2 oder 3, wobei die elektronische Einheit in der Lage ist, eine zwischen 17 und 25 Minuten umfassende Mindestheizdauer für Obst, eine zwischen 22 und 28 Minuten umfassende Mindestheizdauer für Schalentiere, eine zwischen 19 und 30 Minuten umfassende Mindestheizdauer für salzige Cremes und Weichtiere, eine zwischen 20 und 35 Minuten umfassende Mindestheizdauer für süße Cremes und Gemüse, eine zwischen 38 und 40 Minuten umfassende Mindestheizdauer für Fisch, eine zwischen 43 und 45 Minuten umfassende Mindestheizdauer für Geflügel und gehacktes oder in Scheiben geschnittenes Fleisch und eine zwischen 79 und 80 Minuten umfassende Mindestheizdauer für Fleisch am Stück zu speichern.

5. Dampfofen nach Anspruch 4, wobei die elektronische Einheit in der Lage ist, eine Mindestheizdauer von ungefähr 25 Minuten für Obst, eine Mindestheizdauer von ungefähr 28 Minuten für Schalentiere, eine Mindestheizdauer von ungefähr 30 Minuten für salzige Cremes und Weichtiere, eine Mindestheizdauer von ungefähr 35 Minuten für süße Cremes und Gemüse, eine Mindestheizdauer von ungefähr 40 Minuten für Fisch, eine Mindestheizdauer von ungefähr 45 Minuten für Geflügel und gehacktes oder in Scheiben geschnittenes Fleisch und eine Mindestheizdauer von ungefähr 80 Minuten für Fleisch am Stück zu speichern.

6. Dampfofen nach einem der vorangehenden Ansprüche, wobei der Ofen in der Lage ist, eine maximale vorherbestimmte Beladung an Nahrungsmitteln zu garen, die gleich oder weniger als 5600 g ist.

7. Dampfofen nach Anspruch 6, wobei die Nahrungsmittel in einen Beutel platziert sind, der eine Beladung enthält, die gleich oder weniger als 700 g an Nahrungsmitteln ist.

8. Verfahren zum Garen von in einen evakuierten und verschlossenen Beutel platzierten und in einen Dampfofen geladenen Nahrungsmitteln, **dadurch gekennzeichnet, dass** es die folgenden Schritte umfasst:

    - Wählen einer Nahrungsmittelkategorie;
    - automatisches Auswählen einer vorherbestimmten Heiztemperatur, die mit einer Gruppe von Nahrungsmittelkategorien, zu der die gewählte Nahrungsmittelkategorie gehört und mit einer vorherbestimmen maximalen Nahrungsmittelmenge zusammenhängt, und
    - Halten der Nahrungsmittel auf der genannten vorherbestimmten Temperatur während einer vorherbestimmten Dauer, um eine vorherbestimmte Reduktion an Nahrungsmittelpathogenen zu erreichen.

9. Verfahren nach Anspruch 8, wobei die genannte vorherbestimmte Dauer experimentell auf der Basis eines Schwellenwerts F bestimmt wird:

$$F_T = t \cdot 10^{(T - T_{ref})/z}$$

wobei T die gemessene Temperatur in den Nahrungsmitteln ist, die in einem bei der vorherbestimmten Heiztemperatur in den Ofen geladenen Vakuumbeutel enthalten sind, $T_{ref}$ die zur Ermittlung einer dezimalen Reduktionszeit verwendete Referenztemperatur ist und der z-Wert der Temperaturkoeffizient der mikrobiellen Zerstörung für ein vorherbestimmtes Pathogen ist.

**10.** Verfahren nach Anspruch 8, wobei die genannte vorherbestimmte Dauer experimentell auf der Basis eines Schwellenwerts F bestimmt wird:

$$F = \Delta t \sum 10^{(T-T_{ref})/z} = \Delta t \sum L \quad.$$

wobei T die gemessene Temperatur in den in einem Vakuumbeutel enthaltenen Nahrungsmitteln ist, $T_{ref}$ die zur Ermittlung einer dezimalen Reduktionszeit verwendete Referenztemperatur ist, der z-Wert der Temperaturkoeffizient der mikrobiellen Zerstörung für ein vorherbestimmtes Pathogen ist und L die Letalzeit ist:

$$L = 10^{(T-T_{ref})/z}.$$

**11.** Verfahren nach Anspruch 9 oder 10, wobei die Referenztemperatur ungefähr 60 °C beträgt und der z-Wert ungefähr 7,2 °C beträgt, wobei es sich bei dem pathogenen Referenzmikroorganismus um L. monocytogenes handelt.

**12.** Verfahren nach einem der Ansprüche 8-11, wobei die Temperatur aus drei verschiedenen Temperaturen von 95 °C, 85 °C und 75 °C ausgewählt wird, die drei Gruppen von Nahrungsmittelkategorien entsprechen: einer ersten Gruppe von Nahrungsmittelkategorien, umfassend Cremes (salzig oder süß), Obst, Gemüse und Weichtiere, einer zweiten Gruppe von Nahrungsmittelkategorien, umfassend Schalentiere, Fisch und Geflügel und einer dritten Gruppe von Nahrungsmittelkategorien, umfassend alle Arten von Fleisch.

**13.** Verfahren nach Anspruch 12, wobei die vorherbestimmte Heizdauer für Obst zwischen 17 und 25 Minuten umfasst, für Schalentiere zwischen 22 und 28 Minuten umfasst, für salzige Cremes und Weichtiere zwischen 19 und 30 Minuten umfasst, für süße Cremes und Gemüse zwischen 20 und 35 Minuten umfasst, für Fisch zwischen 38 und 40 Minuten umfasst, für Geflügel und gehacktes oder in Scheiben geschnittenes Fleisch zwischen 43 und 45 Minuten umfasst und für Fleisch am Stück zwischen 79 und 80 Minuten umfasst.

**14.** Verfahren nach einem der vorangehenden Ansprüche, wobei die vorherbestimmte maximale Nahrungsmittelmenge gleich oder weniger als 5600 g ist.

**15.** Verfahren nach Anspruch 14, wobei die maximale Beladung an Nahrungsmitteln in jedem Beutel gleich oder weniger als 700 g ist.

## Revendications

**1.** Four à vapeur pour la cuisson d'un aliment dans un sachet sous vide scellé et comprenant une interface utilisateur et une unité de commande électronique,
**caractérisé en ce que** ladite unité de commande électronique est à même de choisir une température de chauffage prédéterminée sur la base d'une catégorie d'aliment choisie par l'utilisateur via l'interface utilisateur et d'une charge maximale prédéterminée d'aliment, et de choisir une durée de chauffage selon une réduction prédéterminée des agents pathogènes alimentaires.

**2.** Four à vapeur selon la revendication 1, dans lequel l'unité de commande électronique est capable de stocker différentes températures de cuisson, chacune correspondant à un ensemble prédéterminé de catégories d'aliments, et différentes durées de chauffage prédéterminées correspondant chacune à une catégorie d'aliment.

**3.** Four à vapeur selon la revendication 2, dans lequel l'unité de commande électronique est capable de stocker trois températures différentes de 95 °C, 85 °C et 75 °C correspondant aux trois ensembles suivants de catégories d'aliments : un premier ensemble de catégories d'aliments comprenant les crèmes (salées ou sucrées), les fruits, les légumes et les mollusques, un deuxième ensemble de catégories d'aliments comprenant les fruits de mer, les poissons et la volaille et un troisième ensemble de catégories d'aliments comprenant tous types de viandes.

**4.** Four à vapeur selon la revendication 2 ou la revendication 3, dans lequel l'unité électronique est capable de stocker une durée de chauffage minimale comprise entre 17 et 25 minutes pour les fruits, une durée de chauffage minimale comprise entre 22 et 28 minutes pour les fruits de mer, une durée de chauffage minimale comprise entre 19 et 30 minutes pour les crèmes salées et les mollusques, une durée de chauffage minimale comprise entre 20 et 35 minutes pour les crèmes sucrées et les légumes, une durée de chauffage minimale comprise entre 38 et 40 minutes pour les poissons, une durée de chauffage minimale comprise entre 43 et 45 minutes pour la volaille et pour des morceaux ou des tranches de viande et une durée de chauffage minimale comprise entre 79 et 80 minutes pour des pièces de viande.

**5.** Four à vapeur selon la revendication 4, dans lequel l'unité électronique est capable de stocker une durée de chauffage minimale d'environ 25 minutes pour les fruits, une durée de chauffage minimale d'environ 28 minutes pour les fruits de mer, une durée de chauffage minimale d'environ 30 minutes pour les crèmes salées et les mollusques, une durée de chauffage minimale d'environ 35 minutes pour les crèmes sucrées et les légumes, une durée de chauffage minimale d'environ 40 minutes pour les poissons, une durée de chauffage minimale de 45 minutes pour la volaille et des morceaux ou des tranches de viande et une durée de chauffage minimale d'environ 80 minutes pour des pièces de viande.

**6.** Four à vapeur selon l'une quelconque des revendications précédentes, dans lequel le four est capable de cuire une charge maximale prédéterminée d'aliment qui est égale ou inférieure à 5600 g.

**7.** Four à vapeur selon la revendication 6, dans lequel l'aliment est placé dans un sachet contenant une charge égale ou inférieure à 700 g d'aliment.

**8.** Procédé de cuisson d'aliment placé dans un sachet sous vide scellé et chargé dans un four à vapeur, **caractérisé en ce qu'**il comprend les étapes suivante consistant à :

- choisir une catégorie d'aliment ;
- choisir automatiquement une température de chauffage prédéterminée en rapport avec un ensemble de catégories d'aliments auxquelles la catégorie d'aliment choisie appartient et avec une quantité maximale prédéterminée d'aliment, et
- maintenir l'aliment à ladite température prédéterminée pendant une durée prédéterminée pour obtenir une réduction prédéterminée d'agents pathogènes alimentaires.

**9.** Procédé selon la revendication 8, dans lequel ladite durée prédéterminée est établie expérimentalement sur la base d'une valeur de seuil F :

$$F_T = t.10^{(T-T\text{réf})/z}$$

dans laquelle T est la température mesurée à l'intérieur de l'aliment contenu dans un sachet sous vide chargé dans le four à la température de chauffage prédéterminée, $T_{\text{réf}}$ est la température de référence utilisée pour déterminer une durée de réduction décimale et la valeur z est le coefficient de température de destruction microbienne pour un agent pathogène prédéterminé.

**10.** Procédé selon la revendication 8, dans lequel ladite durée prédéterminée est établie expérimentalement sur la base de la valeur de seuil F :

$$F = \Delta t \sum 10^{(T-T\text{réf})/z} = \Delta t \sum L$$

dans laquelle T est la température mesurée à l'intérieur de l'aliment contenu dans un sachet sous vide, $T_{réf}$ est la température de référence utilisée pour déterminer une durée de réduction décimale, la valeur z est le coefficient de température de destruction microbienne pour un agent pathogène prédéterminé et L est la durée létale $L = 10^{(T-Tréf)/z}$.

11. Procédé selon la revendication 9 ou la revendication 10, dans lequel la température de référence est d'environ 60 °C et la valeur z est d'environ 7,2 °C, le microorganisme pathogène de référence étant la souche L. monocytogenes.

12. Procédé selon l'une quelconque des revendications 8 à 11, dans lequel la température est choisie parmi trois températures de 95 °C, 85 °C et 75 °C correspondant aux trois ensembles suivants de catégories d'aliments : un premier ensemble de catégories d'aliments comprenant les crèmes (salées ou sucrées), les fruits, les légumes et les mollusques, un deuxième ensemble de catégories d'aliments comprenant les fruits de mer, les poissons et la volaille et un troisième ensemble de catégories d'aliments comprenant tous types de viandes.

13. Procédé selon la revendication 12, dans lequel la durée de chauffage minimale est comprise entre 17 et 25 minutes pour les fruits, entre 22 et 28 minutes pour les fruits de mer, entre 19 et 30 minutes pour les crèmes salées et les mollusques, entre 20 et 35 minutes pour les crèmes sucrées et les légumes, entre 38 et 40 minutes pour les poissons, entre 43 et 45 minutes pour la volaille et pour des morceaux ou des tranches de viande et entre 79 et 80 minutes pour des pièces de viande.

14. Procédé selon l'une quelconque des revendications précédentes, dans lequel la quantité maximale prédéterminée d'aliment est égale ou inférieure à 5600 g.

15. Procédé selon la revendication 14, dans lequel la charge maximale d'aliment dans chaque sachet est égale ou inférieure à 700 g.

Fig. 1

Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5445062 A